# EUROPEAN PATENT APPLICATION

(11) **EP 4 411 457 A1**
(43) Date of publication of application: **07.08.2024**
(21) Application number: 24154373.5
(22) Date of filing: 29.01.2024
(51) Int. Cl.: G02B 27/10, G03B 21/20, G02B 19/00

(54) **MULTI-COLOR LIGHT SOURCE**

(30) Priority: 31.01.2023 US 202363442335 P; 01.05.2023 US 202318141932
(71) Applicant: Meta Platforms Technologies, LLC, Menlo Park, CA 94025 (US)
(72) Inventor: Fabien, Chloe Astrid Marie, Menlo Park (US); Patterson, Keith, Menlo Park (US); Gollier, Jacques, Menlo Park (US); Lamansky, Sergey, Menlo Park (US); Wheelwright, Brian, Menlo Park (US); Greif, Daniel Guenther, Menlo Park (US)
(74) Representative: Murgitroyd & Company

(57) **Abstract**

A multi-color light source for a scanning projector display includes a plurality of semiconductor light sources color-combined to provide a multi-color output collimated light beam. Two of the semiconductor chips may be brought together and their light output may be collimated by a common collimator including fast-axis and slow-axis collimating elements. A lightguide equipped with an in- / out-coupling grating structure may be used to combine light beams of different wavelengths and/or polarizations.

## Description

### TECHNICAL FIELD

The present disclosure relates to diffractive optical elements and related optical systems and methods.

### BACKGROUND

Visual display systems provide information to viewer(s) including still images, video, data, etc. Visual displays have applications in diverse fields including entertainment, education, engineering, science, training, advertising, to name just a few examples. Some visual displays, such as TV sets, display images to several users, while some visual display systems, such as near-eye displays (NEDs), are intended for use by individual viewers. NEDs wearable on the user's head may be self-contained, or may be connected to a controller or a console providing the video feed and/or required control functions.

An artificial reality system may include an NED (e.g., a headset or a pair of glasses) configured to present content to a user. The NED may display virtual objects or combine images of real objects with virtual objects in virtual reality (VR), augmented reality (AR), or mixed reality (MR) applications. For example, in an AR system, a user may view images of virtual objects (i.e., computer-generated images) superimposed with the surrounding environment by seeing through a "combiner" component. The combiner of a wearable display is typically transparent to external light but includes some light routing optic to place the display-generated images into the user's field of view.

Because a display of HMD is worn on the head of a user, a large, bulky, unbalanced, and/or heavy display device would be cumbersome and uncomfortable for the user to wear. Consequently, head-mounted display devices can benefit from a compact and efficient configuration, including efficient multi-color light sources and illuminators for scanning image projectors, high-throughput ocular lenses, reflectors, diffractive optical elements, and other compact optical elements in the image forming train.

### SUMMARY

According to a first aspect, there is provided a multi-color light source comprising: first to third semiconductor sources for emitting first to third light beams of first to third colors respectively, wherein in operation, the first and second light beams co-propagate with one another; a first collimator coupled to the first and second semiconductor sources for at least partially co-collimating the first and second co-propagating light beams, respectively, to obtain a first collimated beam, and a second collimator coupled to the third semiconductor source for at least partially collimating the third light beam to obtain a second collimated beam; and a combiner for combining the first and second collimated beams into an output beam of the multi-color light source.

The combiner may comprise a lightguide comprising: a slab of transparent material; and a grating structure supported by the slab. The grating structure may comprise an in-coupling region at a first location for in-coupling one of the first or second collimated beams for propagating in the slab in a first direction by internal reflections from opposed surfaces of the slab to a second location offset from the first location along the slab. The grating structure may comprise an out-coupling region at the second location for out-coupling the one of the first or second collimated beams from the slab at the second location. The other one of the first or second collimated beams may be configured to propagate through the slab at the second location to form the output beam.

The grating structure may comprise at least one of: a volume Bragg grating (VBG); a polarization volume hologram (PVH); or a Pancharatnam-Berry phase (PBP) grating.

The first to third semiconductor sources may comprise first to third side-emitting semiconductor chips, respectively. The first to third light beams may each have a fast-axis divergence in a fast-axis plane and a slow-axis divergence in a slow-axis plane perpendicular to the fast-axis plane and less than the fast-axis divergence. The first and second side-emitting semiconductor chips may be disposed proximate to one another in a first plane. The third side-emitting semiconductor chip may be disposed in a second plane.

The second plane may be above or below the first plane.

The first collimator may comprise a first fast-axis collimator for co-collimating the first and second light beams in the corresponding fast-axis planes. The second collimator may comprise a second fast-axis collimator for collimating the third light beam in the corresponding fast-axis plane.

The first collimator may further comprise a first slow-axis collimator upstream of the combiner for co-collimating the first and second light beams in the corresponding slow-axis plane. The second collimator may further comprise a second slow-axis collimator upstream of the combiner for co-collimating the third light beam in the corresponding slow-axis plane.

The multi-color light source may further comprise a slow-axis collimator downstream of the combiner for collimating the output beam in the corresponding slow-axis plane.

The first and second fast-axis collimators may each have a negative optical power in the slow-axis plane and positive optical power in the fast-axis plane.

The first collimator may comprise a first slow-axis de-collimator for de-collimating the first and second light beams in the corresponding slow-axis planes. The second collimator may comprise a second slow-axis de-collimator for de-collimating the third light beam in the corresponding slow-axis plane.

The first slow-axis de-collimator may be configured to equate a divergence of the first light beam in fast- and slow-axis planes, and may be configured to equate a divergence of the second light beam in fast- and slow-axis planes. The second slow-axis de-collimator may be configured to equate a divergence of the second light beam in fast- and slow-axis planes. Each one of the first and second collimators may further comprise a rotationally-symmetric collimating element downstream of the respective slow-axis de-collimator, for collimating the first and second light beams respectively.

The multi-color light source may further comprise a fourth semiconductor source for emitting a fourth light beam co-propagating with the third light beam. The first to fourth semiconductor sources may comprise first to fourth side-emitting semiconductor chips, respectively. The second collimator may be configured for co-collimating the co-propagating third and fourth light beams to form the second collimated beam.

The first and second side-emitting semiconductor chips may be disposed side-by-side in a common first plane. The third and fourth side-emitting semiconductor chips may be disposed side-by-side in a common second plane.

The third color may correspond to a red color of visible light.

The first and second collimators may each comprise at least one of a refractive lens, a diffractive lens, a Pancharatnam-Berry phase (PBP) lens, or a reflector.

According to a second aspect, there is provided a multi-color light source comprising: first and second semiconductor sources for emitting first and second light beams at first and second wavelengths respectively; first and second collimators for collimating the first and second light beams respectively to obtain first and second collimated beams respectively; and a lightguide comprising: a slab of transparent material; and a grating structure supported by the slab and comprising an in-coupling region at a first location for in-coupling the first collimated beam for propagating in the slab in a first direction by internal reflections from opposed surfaces of the slab to a second location offset from the first location along the slab; and an out-coupling region at the second location for out-coupling the first collimated beam from the slab; wherein in operation, the second collimated beam propagates through the slab at the second location to combine with the first collimated beam.

The grating structure may comprise at least one of: a volume Bragg grating (VBG); a polarization volume hologram (PVH); or a Pancharatnam-Berry phase (PBP) grating.

According to a third aspect, there is provided a method for providing a multi-color light beam, the method comprising: collimating first and second light beams of first and second colors respectively, emitted by first and second semiconductor sources respectively, to obtain first and second collimated beams respectively; in-coupling the first collimated beam into a lightguide at a first location for propagating in the lightguide in a first direction by internal reflections from opposed surfaces of the lightguide to a second location; out-coupling the first collimated beam from the lightguide at the second location; and propagating the second collimated beam from outside and through the lightguide at the second location, thereby combining the first and second collimated beams into the multi-color light beam.

The first and second collimated beams may be combined into the multi-color light beam by wavelength.

The first and second collimated beams may be combined into the multi-color light beam by polarization..

### BRIEF DESCRIPTION OF THE DRAWINGS

Examples will now be described in conjunction with the drawings, in which:
FIG. 1 is a schematic plan view of a multi-color light source of this disclosure including three semiconductor light sources;
FIG. 2 is a plan view of a multi-color light source of this disclosure including four semiconductor light sources;
FIG. 3A is a plan view of a lightguide of the multi-color light source of FIG. 1;
FIG. 3B is a three-dimensional view of the multi-color light source of FIG. 3A;
FIG. 4 is a three-dimensional view of a multi-color light source with vertical placement of the semiconductor sources;
FIG. 5 is a three-dimensional view of a multi-color light source variant with vertical placement of the semiconductor light sources and a folding mirror;
FIG. 6 is a schematic plan view of a multi-color light source with anamorphic fast-axis collimators and cylindrical slow-axis collimators;
FIG. 7 is a schematic plan view of a multi-color light source with collimators including cylindrical and rotationally symmetrical lenses;
FIG. 8 is a schematic plan view of a multi-color light source with a common slow-axis collimator;
FIG. 9 is a schematic plan view of a multi-color light source with a dichroic mirror combiner;
FIG. 10 is a schematic plan view of a multi-color light source of this disclosure including two semiconductor sources and a lightguide-based combiner;
FIGs. 11A is a side cross-sectional view of a polarization volume grating (PVH) usable in a lightguide-based combiner this disclosure;
FIG. 11B is a diagram illustrating polarization performance of the PVH of FIG. 11A;
FIG. 12 is a flow chart of a method for providing a multi-color light beam;
FIG. 13 is a view of an augmented reality (AR) display of this disclosure having a form factor of a pair of eyeglasses; and
FIG. 14 is a three-dimensional view of a head-mounted display (HMD) of this disclosure.

### DETAILED DESCRIPTION

While the present teachings are described in conjunction with various examples, it is not intended that the present teachings be limited to such examples. On the contrary, the present teachings encompass various alternatives and equivalents, as will be appreciated by those of skill in the art. All statements herein reciting principles, aspects, and examples thereof, are intended to encompass both structural and functional equivalents thereof. Additionally, it is intended that such equivalents include both currently known equivalents as well as equivalents developed in the future, i.e., any elements developed that perform the same function, regardless of structure.

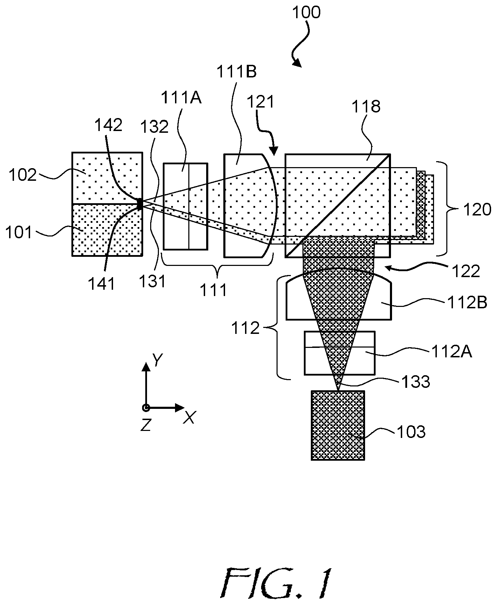

As used herein, the terms "first", "second", and so forth are not intended to imply sequential ordering, but rather are intended to distinguish one element from another, unless explicitly stated. Similarly, sequential ordering of method steps does not imply a sequential order of their execution, unless explicitly stated. In FIGs. 1 to 10, similar reference numerals denote similar elements.

A multi-color light source providing a combined beam including collimated light beams of different colors, e.g., red, green, and blue colors, may be used in scanning image projectors to project color images and videos. The images and videos may be displayed for single or multiple viewers. The brightness, or optical power level, of each collimated beam may be individually controlled as the combined beam is scanned e.g., by a microelectromechanical system (MEMS) two-dimensional (2D) beam scanner forming a displayed image by beam scanning or rastering.

Semiconductor light sources, such as light-emitting diodes, superluminescent light-emitting diodes, or laser diodes (e.g. edge emitters or VCSEL), may be used as the sources of light of each color. Light emitted by these sources needs to be collimated. The collimation may require a separate collimation along so-called slow and fast axes, i.e. axes of slow and fast divergence of an emitted anamorphic laser beam. For edge-emitting laser diode chips, the slow axis is typically parallel to the plane of the chip, and the fast axis is perpendicular to the plane of the chip. A term "slow-axis plane" defines a plane including a direction of beam propagation and the slow axis, and a term "fast-axis plane" accordingly defines a plane including a direction of beam propagation and the fast axis. The magnitudes of divergence of the emitted light along the slow and fast axes, i.e. in slow- and fast-axis planes, may be vastly different. The differing slow and fast divergence may require anamorphic optics for producing an approximately circular output collimated light beam. A collimated light beam with approximately circular cross-section may be preferable to fill optical elements and pupils that are generally circular, e.g. scanning microelectromechanical system (MEMS) reflectors, a combiner element entrance pupil, etc.

The red, green, and blue laser diodes may be placed together in close proximity to one another, and collimated by a common collimator. The common collimator may include a slow-axis collimator, e.g. a cylindrical lens of a comparatively large radius of curvature, and a fast axis collimator, e.g. a cylindrical lens of a comparatively small radius of curvature. Such an approach may be challenging in that it requires a complex optics and/or complex mechanical packaging and thermal management of the laser chips, may cause thermal crosstalk, and may result in sub-optimal collimation due to a discrepancy between light beam divergence characteristics of different laser chips. On the other hand, a separate collimation and coupling of each laser diode often results in a bulky and costly overall optomechanical configuration prone to misalignment due to large number of optomechanical components.

In accordance with this disclosure, two of the three light sources may be co-collimated by a common collimator, while a third and optionally a fourth light source, with the most differing emitted light beam characteristics, may be (co-)collimated by a separate collimator. The multiple collimated beams may then be combined e.g. by color and/or polarization. The fourth light source may emit light in invisible range (infrared or ultraviolet) for sensing purposes, such as eye tracking and/or depth sensing. The beam combiner may include a lightguide having polarization and/or color-selective in- and out-coupling gratings. The dimensions of the lightguide may be selected to ensure thermal de-coupling of the semiconductor light sources while keeping a compact overall optomechanical configuration. In a minimal configuration, light emitted by two semiconductor light sources may be combined using a lightguide-based combiner.

In accordance with the present disclosure, there is provided a multi-color light source comprising first to third semiconductor sources for emitting first to third light beams of first to third colors respectively. In operation, the first and second light beams co-propagate with one another. A first collimator is coupled to the first and second semiconductor sources for at least partially co-collimating the first and second co-propagating light beams, respectively, to obtain a first collimated beam. A second collimator is coupled to the third semiconductor source for at least partially collimating the third light beam to obtain a second collimated beam. A combiner combines the first and second collimated beams into an output beam of the multi-color light source.

In some examples, the combiner includes a waveguide comprising a slab of transparent material and a grating structure supported by the slab. The grating structure comprises an in-coupling region at a first location for in-coupling one of the first or second collimated beams for propagating in the slab in a first direction by internal reflections from opposed surfaces of the slab to a second location offset from the first location along the slab. The waveguide further comprises an out-coupling region at the second location for out-coupling the one of the first or second collimated beams from the slab at the second location. The other one of the first or second collimated beams is configured to propagate through the slab at the second location to form the output beam. The grating structure may include e.g. a volume Bragg grating (VBG); a polarization volume hologram (PVH); and/or a Pancharatnam-Berry phase (PBP) grating.

In some examples, the first to third semiconductor sources comprise first to third side-emitting semiconductor chips, respectively. Each one of the first to third light beams has a fast-axis divergence in a fast-axis plane and a slow-axis divergence in a slow-axis plane perpendicular to the fast-axis plane and less than the fast-axis divergence. The first and second side-emitting semiconductor chips may be disposed proximate to one another in a first plane, and the third side-emitting semiconductor chip may be disposed in a second plane. The second plane may be above or below the first plane.

In some examples, the first collimator may include a first fast-axis collimator for co-collimating the first and second light beams in the corresponding fast-axis planes. The second collimator may include a second fast-axis collimator for collimating the third light beam in the corresponding fast-axis plane. The first collimator may further include a first slow-axis collimator upstream of the combiner for co-collimating the first and second light beams in the corresponding slow-axis plane. The second collimator may further include a second slow-axis collimator upstream of the combiner for co-collimating the third light beam in the corresponding slow-axis plane. Alternatively, a common slow-axis collimator may be disposed downstream of the combiner for collimating the output beam in the corresponding slow-axis plane. The first and second fast-axis collimators may each have a negative optical power in the slow-axis plane and positive optical power in the fast-axis plane.

In some examples, the first collimator comprises a first slow-axis de-collimator for de-collimating the first and second light beams in the corresponding slow-axis planes, and the second collimator comprises a second slow-axis de-collimator for de-collimating the third light beam in the corresponding slow-axis plane. In such examples, the first slow-axis de-collimator may be configured to equate a divergence of the first light beam in fast- and slow-axis planes, and to equate a divergence of the second light beam in fast- and slow-axis planes; and the second slow-axis de-collimator may be configured to equate a divergence of the second light beam in fast- and slow-axis planes. Each one of the first and second collimators may include a rotationally-symmetric collimating element downstream of the respective slow-axis de-collimator, for collimating the first and second light beams respectively; alternatively, a common rotationally-symmetric collimating element may be disposed downstream of the combiner.

In some examples, the multi-color light source further comprises a fourth semiconductor source for emitting a fourth light beam co-propagating with the third light beam, the first to fourth semiconductor sources comprising first to fourth side-emitting semiconductor chips, respectively. The second collimator may be configured for co-collimating the co-propagating third and fourth light beams to form the second collimated beam. The first and second side-emitting semiconductor chips may be disposed side-by-side in a common first plane, and the third and fourth side-emitting semiconductor chips may be disposed side-by-side in a common second plane.

In some examples, the third color corresponds to a red color of visible light. The first and second collimators may each comprise at least one of a refractive lens, a diffractive lens, a PBP lens, or a reflector.

In accordance with the present disclosure, there is provided a multi-color light source comprising first and second semiconductor sources for emitting first and second light beams at first and second wavelengths respectively; first and second collimators for collimating the first and second light beams respectively to obtain first and second collimated beams respectively ; and a lightguide. The lightguide comprises a slab of transparent material, and a grating structure supported by the slab. The grating structure comprises an in-coupling region at a first location for in-coupling the first collimated beam for propagating in the slab in a first direction by internal reflections from opposed surfaces of the slab to a second location offset from the first location along the slab, and an out-coupling region at the second location for out-coupling the first collimated beam from the slab. In operation, the second collimated beam propagates through the slab at the second location to combine with the first collimated beam. The grating structure may include a VBG, a PVH, and/or a PBP grating.

In accordance with the present disclosure, there is further provided a method for providing a multi-color light beam. The method comprises collimating first and second light beams of first and second colors respectively, emitted by first and second semiconductor sources respectively, to obtain first and second collimated beams respectively. The first collimated beam is in-coupled into a lightguide at a first location for propagating in the lightguide in a first direction by internal reflections from opposed surfaces of the lightguide to a second location. The first collimated beam is out-coupled from the lightguide at the second location. The second collimated beam is propagated from outside and through the lightguide at the second location, thereby combining the first and second collimated beams into the multi-color light beam. The first and second collimated beams may be combined into the multi-color light beam by wavelength and/or polarization.

Referring now to FIG. 1, a multi-color light source 100 includes a first semiconductor source 101 emitting a first light beam 131 of a first color, e.g. a blue color, a second semiconductor source 102 emitting a second light beam 132 of a second color, e.g. a green color, and a third semiconductor source 103 emitting a third light beam 133 of a third color, e.g. a red color. A first collimator 111 is coupled to the first 101 and second 102 semiconductor sources. The first collimator 111 collimates together, or co-collimates, the first 131 and second 132 co-propagating light beams to obtain a first collimated beam 121. A second collimator 112 is coupled to the third semiconductor source 103 for collimating the third light beam 133 to obtain a second collimated beam 122. A combiner 118 combines the first 121 and second 122 collimated beams into an output beam 120 of the multi-color light source 100.

In the example shown in FIG. 1, the first 101, second 102, and third 103 semiconductor sources each include a single- or multi-emitter edge-emitting semiconductor chip with a fast-axis divergence in a fast-axis plane and a slow-axis divergence in a slow-axis plane perpendicular to the fast-axis plane and less than the fast-axis divergence. The fast-axis divergence planes are perpendicular to the plane of the side-emitting semiconductor chips, which are all disposed in XY plane as illustrated, and the slow-axis divergence planes are parallel to the planes of the side-emitting semiconductor chips. In other words, the slow-axis planes in this example are parallel to the XY plane. For the first 101 and second 102 semiconductor sources, the fast-axis planes are parallel to the XZ plane. The fast-axis plane of the third semiconductor source 103 is parallel to YZ plane.

The side-emitting semiconductor chips of the first 101 and second 102 semiconductor sources are disposed proximate to one another in the XY plane, with respective emitters 141, 142 being disposed next to each other, as illustrated. The close placement of the emitters 141, 142 allows one to lessen a slight directional misalignment of the blue and green co-collimated beams components in the output beam 120. It is further noted that a small angular misalignment of the collimated beams of different colors is acceptable, because such misalignment is known from the light source geometry and can be compensated for by a corresponding pre-shifting color channels of a color image being produced by a beam scanner receiving and angularly the output beam 120 to generate the color image. In the example of FIG. 1, the side-emitting semiconductor chip of the third semiconductor source 103 is disposed separately, optionally in a same plane as the side-emitting semiconductor chips of the first 101 and second 102 semiconductor sources. Each side-emitting semiconductor chip may include a single emitter or an array of emitters at wavelengths of a same color channel.

The first collimator 111 may include a fast-axis collimator 111A, e.g. a cylindrical lens having optical power in XZ plane, and a slow-axis collimator 111B, which in this example is a cylindrical lens having optical power in XY plane. The second collimator 112 may accordingly include a fast-axis collimator 112A, illustrated as a cylindrical lens having optical power in YZ plane, and a slow-axis collimator 112B, e.g. a cylindrical lens having optical power in XY plane. All collimators 111A, B and 112A, B are disposed upstream of the combiner 118 in the optical path of the light beams 131-133.

The combiner 118 may be implemented, for example, as a polarization beam combiner, or as a dichroic beam combiner. For the former, the first 131 and second 132 light beams may have a first polarization state, and the second light beam 133 may have a second, orthogonal polarization state. For the latter, the dichroic beam combiner may include a dichroic optical filter that propagates through light of the first and second colors but reflects light of the third color.

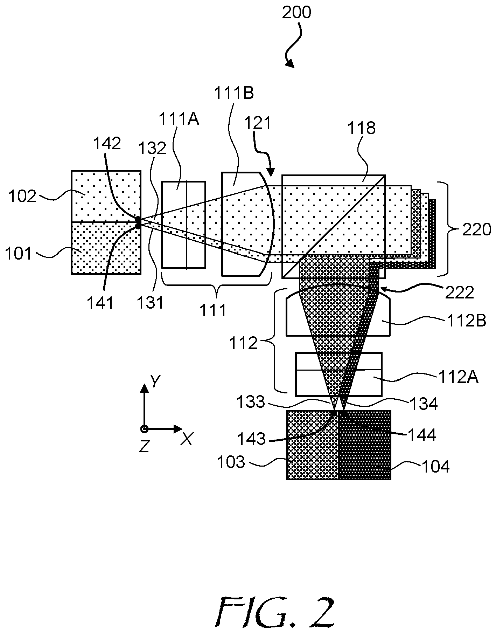

Referring to FIG. 2 with further reference to FIG. 1, a multi-color light source 200 is similar to the multi-color light source 100 of FIG. 1, and includes similar elements. The multi-color light source 200 of FIG. 2 further includes a fourth semiconductor source 104, in this example a side-emitting semiconductor chip, for emitting a fourth light beam 134. The side-emitting semiconductor chips of the third 103 and fourth 104 semiconductor sources are disposed proximate to one another in the XY plane, i.e. side-by-side, with respective emitters 143, 144 being disposed next to each other, as illustrated. The second collimator 112 is configured for co-collimating the third 133 and fourth 134 light beams to form a second collimated beam 222, in a similar manner as the first collimator 111 in FIG. 1 co-collimates the first 131 and second 132 light beams to form the first collimated beam 121. The combiner 118 (FIG. 2) combines the first 121 and second 222 collimated beams into a single output beam 220, similarly as the first 121 and second 122 collimated beams are combined into the output beam 120 in FIG. 1. The fourth light beam 134 (FIG. 2) may carry light of any color channel, or may carry invisible light, such as infrared or ultraviolet light, for environment / object sensing and/or eye tracking purposes.

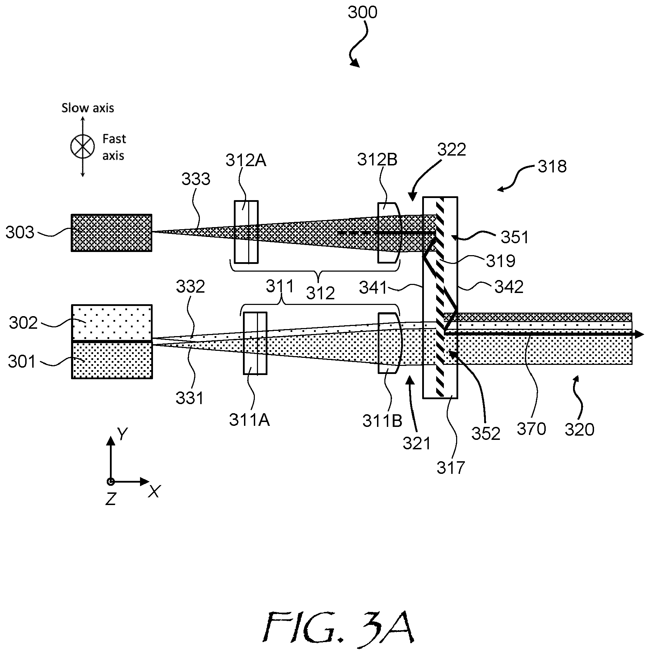

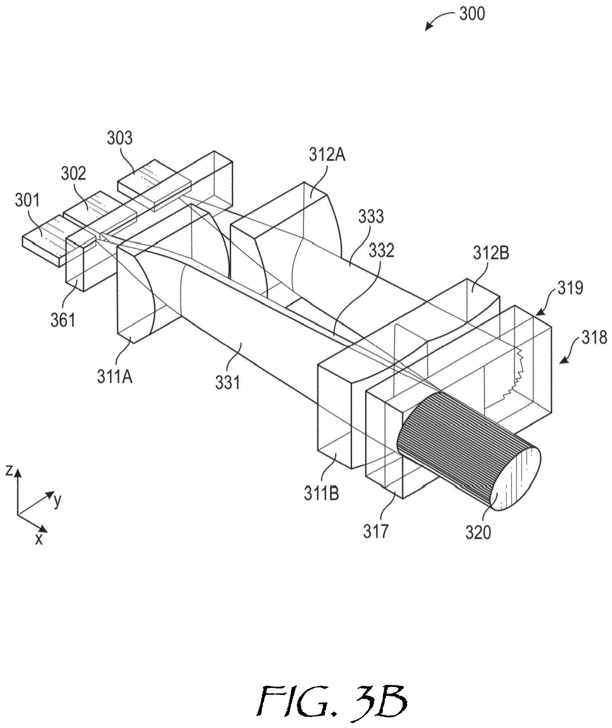

Referring to FIGs. 3A and 3B, a multi-color light source 300 includes first 301, second 302, and third 303 semiconductor sources emitting first 331, second 332, and third 333 diverging light beams respectively. In this example, the first 301, second 302, and third 303 semiconductor sources are laser chips emitting light at blue, green, and red wavelengths respectively. A first collimator 311 collimates together, or co-collimates, the first 331 and second 332 light beams. To that end, the first collimator 311 includes fast 311A and slow 311B cylindrical lenses co-collimating the first 331 and second 332 light beams in fast and slow-axis planes respectively, to obtain a first collimated beam 321. The emitters of the first 301 and second 302 semiconductor sources may be disposed closely together to reduce angular misalignment of collimated beams, as explained above with reference to FIG. 1. A second collimator 312 including fast 312A and slow 312B cylindrical lenses collimates the third light beam 333 in fast and slow-axis planes respectively to obtain a second collimated beam 322. The fast-axis planes of all three sources 301-303 are parallel to the XZ plane, and the slow-axis planes are parallel to the XY plane.

A lightguide 318 is used to combine the first 121 and second 122 collimated beams to obtain a collimated output beam 120, i.e. the lightguide 318 performs the function of the combiner 118 of the multi-color light source 100 of FIG. 1. The lightguide 318 of FIG. 3A includes a slab 317 of transparent material such as glass, plastic, fused silica, a crystalline material, etc. The slab 317 has opposed first 341 and second 342 surfaces. The lightguide 318 further includes a grating structure 319, e.g. a volume Bragg grating, supported by the slab 317. The grating structure 319 includes an in-coupling region at a first location 351 for in-coupling the second collimated beam 322 into the slab 317. The in-coupled second collimated beam 322 propagates in the slab 317 along an optical path 370 shown with thick solid line. The optical path 370 is defined by a series of alternating internal reflections of the second collimated beam 322 from the opposed first 341 and second 342 surfaces of the slab 317.

The in-coupled second collimated beam 322 propagates from the first location 351 where it was in-coupled, to a second location 351 offset from the first location 351 along the slab. The second location 352 is offset from the first location 351 downwards in FIG. 3A, i.e. parallel to and against the direction of Y-axis. The grating structure 319 includes an out-coupling region at the second location 352 for out-coupling the second collimated beam 322 from the slab 317, as indicated by the right-facing arrow of the optical path 370. The first collimated beam 321 propagates through the slab 317 at the second location 352 to form an output beam 320 together with the second collimated beam 322 out-coupled from the slab 317.

The required wavelength and angular selectivity is provided by the grating structure 319. The angular selectivity of the grating structure 319 ensures, for example, that the second collimated light beam 322 does not diffract out of the slab 317 in the middle of the zigzag optical path 370 between the first 351 and second 352 locations. Other configurations of the grating structure 319 may include physically separate in-coupling and out-coupling gratings. The zigzag optical path 370 may include more than one reflection from the first 341 and/or second 342 opposed surfaces of the slab 317. Besides volume Bragg grating (VBG), the grating structure 319 may include e.g. a polarization volume hologram (PVH), a surface-relief grating, and/or a Pancharatnam-Berry phase (PBP) grating.

FIG. 3B illustrates the relative location of the semiconductor sources 301-303, the collimator elements 311A-311B, 312A-312B, and the lightguide 318 in 3D space. In the example illustrated in FIG. 3B, the multi-color light source 300 also includes a window 361 of a hermetic packaging that separates the semiconductor sources 301-303 from the rest of the assembly. One can see that the laser chips of the semiconductor sources 301-303 are disposed all in one plane, which simplifies the laser packaging.

Various modifications of the configuration presented in FIGs. 3A-3B are possible. Each of the collimators 311, 312 may include a lens e.g. a refractive lens, a diffractive lens, a Pancharatnam-Berry phase (PBP) lens, etc. The collimators 311, 312 may each include a flat or curved reflector(s). The lightguide 318 may include a VBG, a liquid crystal layer, a PVH, a surface-relief grating, a geometric waveguide, and/or dichroic filter(s) for in-coupling and/or redirecting the first 321 and/or second 322 collimated beams, and/or out-coupling the output beam 320. Furthermore, the lightguide 318 may be configured to propagate the first collimated beam 321 along the zigzag optical path 370, and propagate the second collimated beam 322 through the slab 317, although the grating configuration in this case may be more complex as two colors need to be in- and out-coupled by the grating structure 319 instead of one.

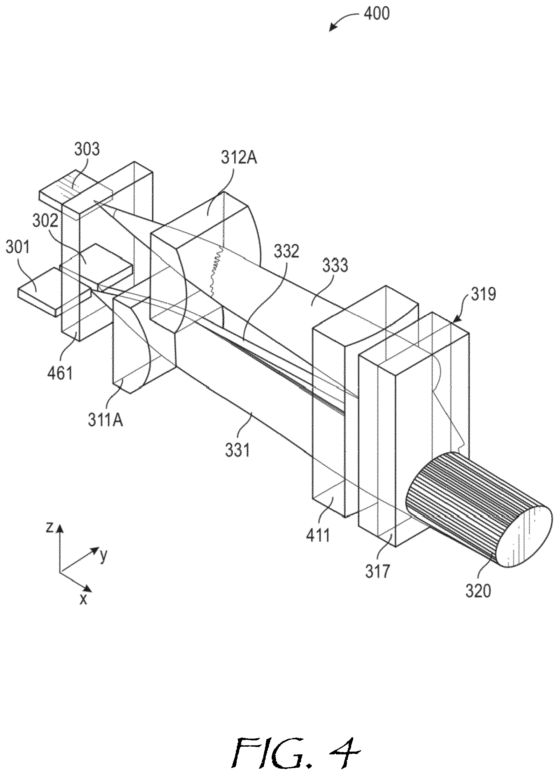

Referring to FIG. 4 with further reference to FIG. 3B, a multi-color light source 400 is similar to the multi-color light source 300 of FIG. 3B, and includes same or similar elements, but differs by relative placement of the semiconductor sources 301-303. In the multi-color light source 400 of FIG. 4, the first 301 and second 302 semiconductor sources are disposed side-by-side in a common first plane parallel to the XY plane, and the third semiconductor laser source 303 is disposed in a second plane above and parallel to the first plane, i.e. offset along Z-axis, allowing the collimators of the multi-color light source 400 to share a slow-axis collimator 411. The vertical placement of the first 301 and second 302 semiconductor sources, on one hand, and the third semiconductor source 303, on the other, may be reversed. The first 301, second 302, and third 303 semiconductor sources may be placed into a hermetic package having a window 461.

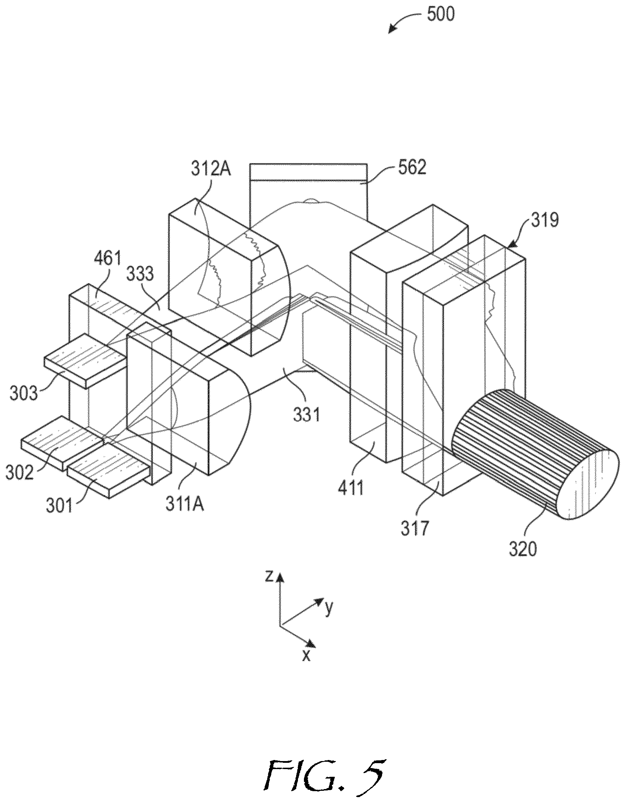

Turning to FIG. 5 with further reference to FIG. 4, a multi-color light source 500 is similar to the multi-color light source 400 of FIG. 4, and includes same elements as the multi-color light source 400. The multi-color light source 500 of FIG. 5 further includes a fold mirror 562 disposed in an optical path of the first 331 to third 333 light beams between the fast-axis collimators 311A, 312A and the common slow-axis collimator 411, for folding the light beam paths, allowing one to reduce the overall size of the multi-color light source 500.

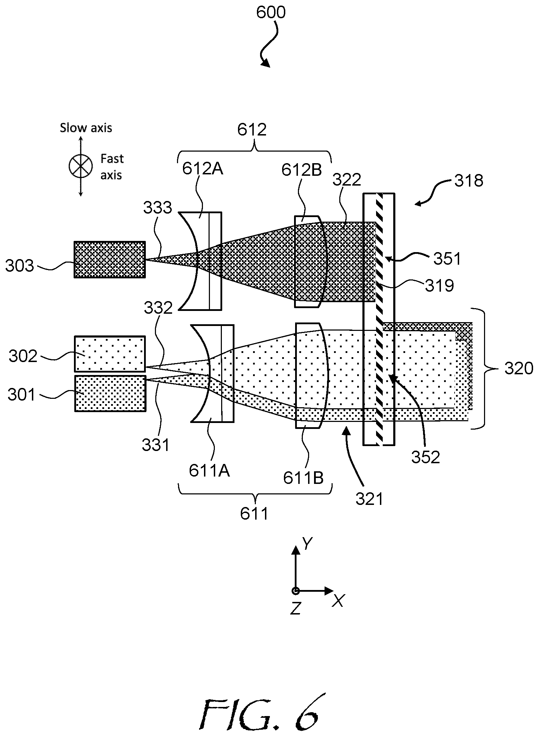

Referring now to FIG. 6 with further reference to FIG. 3A, a multi-color light source 600 is similar to the multi-color light source 300 of FIG. 3A, and includes similar elements as the multi-color light source 300 of FIG. 3A. Specifically, the multi-color light source 600 of FIG. 6 includes the first 301, the second 302, and the third 303 semiconductor sources for emitting the first 331, the second 332, and the third 333 light beam of first, second, and third different colors respectively, e.g. blue, green, and red colors. The multi-color light source 600 further includes a first collimator 611 coupled to the first 301 and second 302 semiconductor sources for co-collimating the first 311 and second 332 co-propagated light beams, respectively, to obtain the first collimated beam 321. The multi-color light source 600 further includes a second collimator 612 coupled to the third semiconductor source 303 for collimating the third light beam 333 to obtain the second collimated beam 322.

The first collimator 611 of the multi-color light source 600 includes a first anamorphic lens element 611A coupled to a cylindrical lens element 611B. The second collimator 612 includes a second anamorphic lens element 612A coupled to a cylindrical lens element 612B. The first anamorphic lens element 611A has a negative optical power in the slow-axis plane due to a concave cylindrical upstream surface and positive optical power in the fast-axis plane due to a convex cylindrical downstream surface, and thus operates as a slow-axis de-collimator or beam expander for de-collimating the first 331 and second 332 light beams in the corresponding slow-axis planes, which are parallel to the XY plane. Similarly, the second anamorphic lens element 612A has a negative optical power in the slow-axis plane and positive optical power in the fast-axis plane, and thus operates as a slow-axis de-collimator for de-collimating the third light beam 333 in the corresponding slow-axis plane, which is parallel to the XY plane. This enables the first 611A and second 612A anamorphic lens elements to be placed in close proximity to the first 301 to third 303 semiconductor light sources, reducing the size of the multi-color light source 600 in X direction as compared to the multi-color light source 300 of FIG. 3A, at a similar size of the output beam 320. The reduced distance between the fast and slow axis collimators in the collimators 611, 612 may be <5mm in some examples, allowing the first 611A and second 612A anamorphic lens elements to be placed inside respective hermetic packages, if so desired.

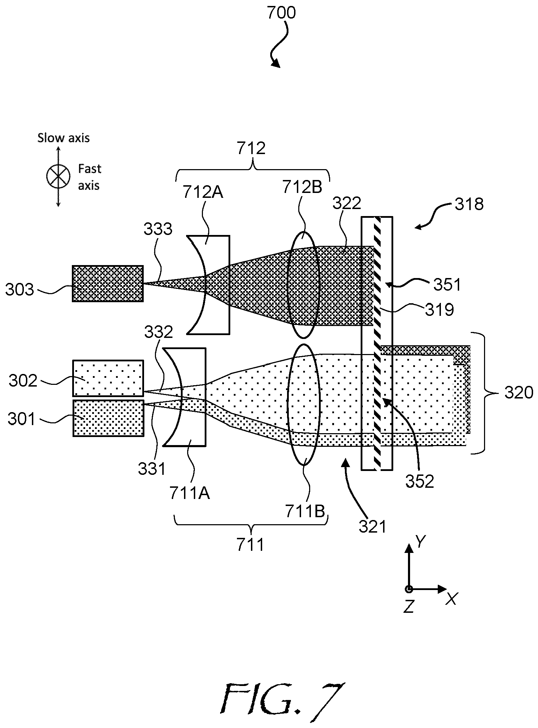

Turning to FIG. 7 with further reference to FIG. 6, a multi-color light source 700 is similar to the multi-color light source 600 of FIG. 6, and includes similar elements. Specifically, the multi-color light source 700 of FIG. 7 includes the first 301, the second 302, and the third 303 semiconductor sources for emitting the first 331, the second 332, and the third 333 light beam of first, second, and third different colors respectively, e.g. blue, green, and red colors. The multi-color light source 700 further includes a first collimator 711 coupled to the first 301 and second 302 semiconductor sources for co-collimating the first 331 and second 332 co-propagated light beams, respectively, to obtain the first collimated beam 321. The multi-color light source 700 further includes a second collimator 712 coupled to the third semiconductor source 303 for collimating the third light beam 333 to obtain the second collimated beam 322.

The first collimator 711 includes a first cylindrical lens 711A, which operates as a slow-axis de-collimator for de-collimating the first 331 and second 332 light beams in the corresponding slow-axis planes to equate a divergence of each of these beams in fast- and slow-axis planes. The first collimator 711 may further include a first spherical lens 711B, or another rotationally-symmetric collimating element, downstream of the first cylindrical lens 711A for forming a first collimated beam 321. Similarly, the second collimator 712 includes a second cylindrical lens 712A, which operates as a slow-axis de-collimator for de-collimating the third light beam 333 in the slow-axis plane to equate a divergence of the third light beam 333 in the fast- and slow-axis planes. The second collimator 712 may further include a second spherical lens 712B, or another rotationally-symmetric collimating element, disposed downstream of the second cylindrical lens 712A for forming the second collimated beam 322. The distance between the fast and slow axis collimators in the collimators 711, 712 may be <3mm in some examples, resulting in a very compact overall configuration.

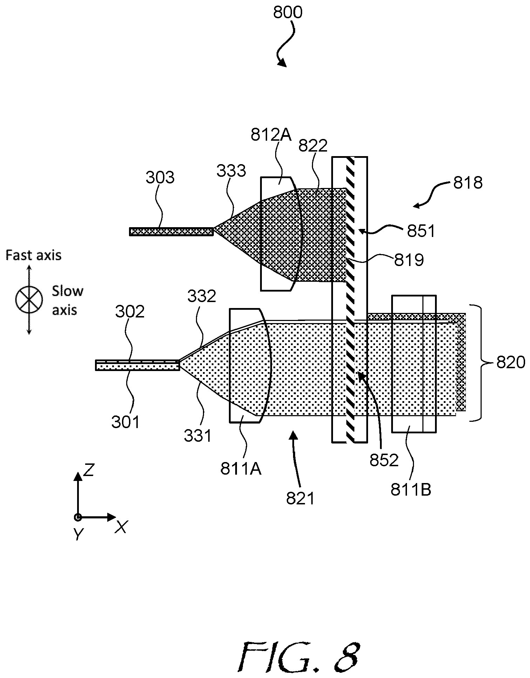

Turning now to FIG. 8 with further reference to FIG. 4, a multi-color light source 800 is similar to the multi-color light source 400 of FIG. 4, and includes similar elements. Specifically, the multi-color light source 800 of FIG. 8 includes the first 301 to third 303 semiconductor sources, with the third semiconductor source 303 placed above the first 301 and second 302 semiconductor sources. The multi-color light source 800 further includes first 811A and second 812A fast-axis collimators. The first fast-axis collimator 811A co-collimates first 331 and second 332 light beams emitted by the first 301 and second 302 semiconductor sources respectively in the fast-axis plane i.e. XZ plane, forming a first collimated beam 821. The second fast-axis collimator 812A co-collimates a third light beam 333 emitted by the third semiconductor source 303 in the fast-axis plane, forming a second collimated beam 822. The two beams are combined into an output beam 820 by a lightguide 818 similar to the lightguide 318 of FIG. 3A.

The lightguide 818 includes a grating structure 819 that in-couples the second collimated beam 822 into the lightguide 818 at a first location 851, and out-couples the laterally offset (in a direction opposite to the Z-axis in FIG. 8) second collimated beam 822 combined with the first collimated beam 821 at a laterally offset second location 852. The two beams are co-collimated in the slow-axis plane by a common slow-axis collimator 811B disposed downstream of the lightguide 818, resulting in a compact overall configuration. The distance between the fast axis collimator and the lightguide may be <5mm in some examples.

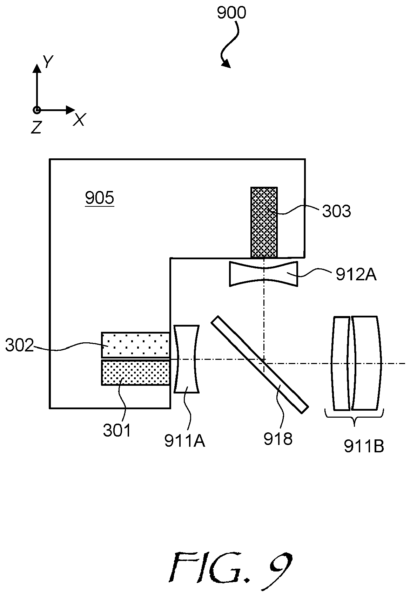

Referring to FIG. 9, a multi-color light source 900 includes an L-shaped base 905 in XY plane, the first 301 to third 303 semiconductor sources mounted to the L-shaped base 905. A first fast-axis de-collimator 911A de-collimates light emitted by the first 301 and second 302 semiconductor sources in the corresponding slow-axis planes, which are parallel to XZ plane. A second fast-axis de-collimator 912A de-collimates light emitted by the third 303 semiconductor source in its corresponding slow-axis plane, which is parallel to YZ plane. The slow-axis divergence is increased by the first 911A and second 912A slow-axis de-collimators to match the fast-axis divergence. A dichroic beam combiner 918 combines the collimated light beams by wavelength, directing them to a common rotationally symmetric slow-axis collimator 911B. The dichroic beam combiner 918 may include a multilayer dielectric coating configured to transmit light at wavelengths of the first 301 and second 302 semiconductor sources while reflecting light at a wavelength of the third semiconductor source 303.

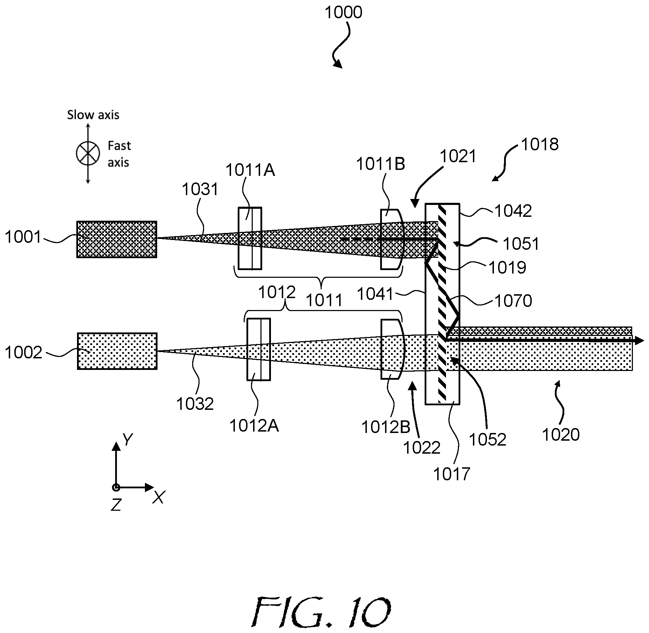

Turning now to FIG. 10 with further reference to FIG. 3A, a multi-color light source 1000 is similar to the multi-color light source 300 of FIG. 3A, and includes similar elements. The multi-color light source 1000 of FIG. 10 includes two semiconductor light sources, a first semiconductor light source 1001 emitting a first light beam 1031 at a first wavelength, and a second semiconductor light source 1002 emitting a second light beam 1032 at a second, different wavelength. Both semiconductor light sources 1001 and 1002 are disposed in XY plane.

The multi-color light source 1000 further includes first 1011 and second 1012 collimators for collimating the first 1031 and second 1032 light beams respectively to obtain first 1021 and second 1022 collimated beams respectively. In the example illustrated, the first 1001 and second 1002 semiconductor light sources are side-emitting diode laser chips, with a fast-axis divergence (in XZ plane) much larger than a slow-axis divergence (in XY plane). To provide a round (i.e. not elliptical) output beam 1020, the first 1011 and second 1012 collimators need to be anamorphic, i.e. they need to expand the light beams differently in fast- and slow-axis planes. To achieve this, the first collimator 1011 may include a fast-axis collimator 1011A, e.g. a cylindrical lens, and a slow-axis collimator 1011B, e.g. a cylindrical lens, disposed downstream of the fast-axis collimator 1011A. Similarly, the second collimator 1012 may include a fast-axis collimator 1012A, e.g. a cylindrical lens, and a slow-axis collimator 1012B, e.g. a cylindrical lens, disposed downstream of the fast-axis collimator 1012A.

The multi-color light source 1000 further includes a lightguide 1018, which is similar to the lightguide 318 of FIG. 3A. The lightguide 1018 includes a slab 1017 of transparent material, and a grating structure 1019 supported by the slab 1017. The grating structure 1019 includes an in-coupling region at a first location 1051 for in-coupling the first collimated beam 1021 for propagating in the slab 1017 in a first direction, which is in FIG. 10 a downward direction parallel to Y-axis, along an optical path 1070 defined by a series of alternating internal reflections from opposed first 1041 and second 1042 surfaces of the slab 1017 to a second location 1052 offset from the first location 1051 along the slab 1017. The grating structure 1019 further includes an out-coupling region at the second location 1052 for out-coupling the first collimated beam from the slab 1017. In the example shown, the grating structure 1019 is a volume Bragg grating (VBG) extending from the first 1051 to the second 1052 location. The directional selectivity of the VBG enables the first collimated beam to propagate through the VBG along the optical path 1070 between inner reflections from the first 1041 and second 1042 surfaces of the slab 1017. The second collimated beam 1022 propagates through the slab 1017 at the second location 1052 to combine with the first collimated beam 1051. The VBG implementation of the grating structure 1019 is meant only as an example. Many other grating types may be used, including without limitation a PVH grating and/or a PBP grating.

It is to be understood that the multicolor / multi-wavelength light sources of FIGs. 1-10 considered herein are merely illustrative and non-limiting examples. Many modifications of these are possible. For instance, the colors are not limited to RGB colors only. The combiners are not limited to lightguides. Many other combiner types may be used that combine light beams, e.g. by polarization (by using polarizers, polarization volume holograms, etc.), wavelength (dichroic reflectors, Bragg reflectors, surface-relief gratings, volume Bragg gratings, etc.). Partially collimated beams may be combined, although fully collimated beams may be easier to combine due to a better directivity of the collimated beams.

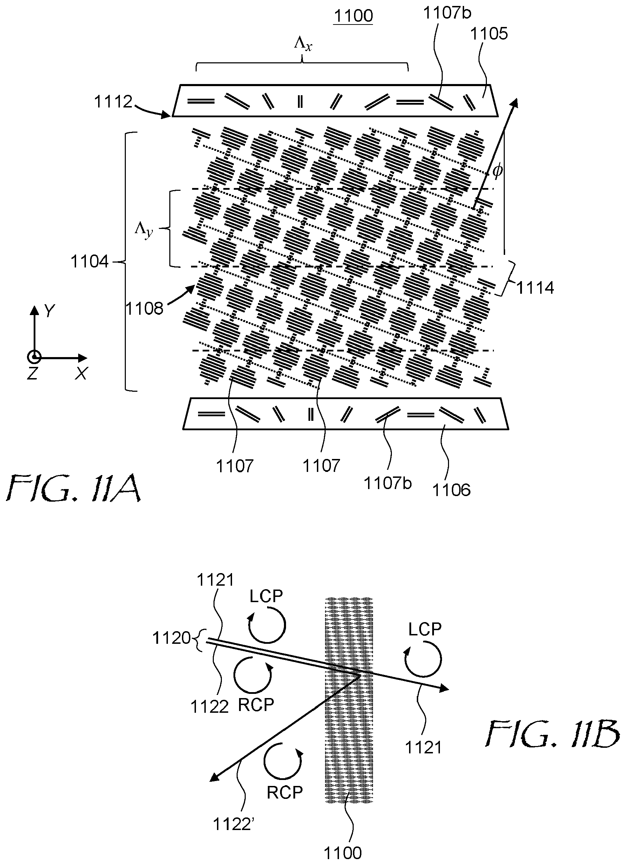

Turning to FIG. 11A, a polarization volume hologram (PVH) grating 1100 may be used as the grating structure 319 of the lightguide 318 of FIGs. 3A-3B, FIGs. 4-7, the grating structure 819 of the lightguide 818 of FIG. 8, and the grating structure 1019 of the lightguide 1018 of FIG. 10. The PVH grating 1100 of FIG. 11A includes an LC layer 1104 bound by opposed top 1105 and bottom 1106 parallel surfaces. The LC layer 1104 may include an LC fluid containing rod-like LC molecules 1107 with positive dielectric anisotropy, i.e. nematic LC molecules. A chiral dopant may be added to the LC fluid, causing the LC molecules in the LC fluid to self-organize into a periodic helical configuration including helical structures 1108 extending between the top 1105 and bottom 1106 parallel surfaces of the LC layer 1104. Such a configuration of the LC molecules 1107, termed herein a cholesteric configuration, includes a plurality of helical periods p, e.g. at least two, at least five, at least ten, at least twenty, or at least fifty helical periods p between the top 1105 and bottom 1106 parallel surfaces of the LC layer 1104.

Boundary LC molecules 1107b at the top surface 1105 of the LC layer 1104 may be oriented at an angle to the top surface 1105. The boundary LC molecules 1107b may have a spatially varying azimuthal angle, e.g. linearly varying along X-axis parallel to the top surface 1105, as shown in FIG. 11A. To that end, an alignment layer 1112 may be provided at the top surface 1105 of the LC layer 1104. The alignment layer 1112 may be configured to provide the desired orientation pattern of the boundary LC molecules 1107b, such as the linear dependence of the azimuthal angle on the X-coordinate. A pattern of spatially varying polarization directions of the UV light may be selected to match a desired orientation pattern of the boundary LC molecules 1107b at the top surface 1105 and/or the bottom surface 1106 of the LC layer 1104. When the alignment layer 1112 is coated with the cholesteric LC fluid, the boundary LC molecules 1107b are oriented along the photopolymerized chains of the alignment layer 1112, thus adopting the desired surface orientation pattern. Adjacent LC molecules adopt helical patterns extending from the top 1105 to the bottom 1106 surfaces of the LC layer 1104, as shown.

The boundary LC molecules 1107b define relative phases of the helical structures 1108 having the helical period p. The helical structures 1108 form a volume grating comprising helical fringes 1114 tilted at an angle □, as shown in FIG. 11A. The steepness of the tilt angle □ depends on the rate of variation of the azimuthal angle of the boundary LC molecules 1107b at the top surface 1105 and p. Thus, the tilt angle □ is determined by the surface alignment pattern of the boundary LC molecules 1107b at the alignment layer 1112. The volume grating has a period □x along X-axis and □y along Y-axis. In some examples, the periodic helical structures 1108 of the LC molecules 1107 may be polymer-stabilized by mixing in a stabilizing polymer into the LC fluid, and curing (polymerizing) the stabilizing polymer.

The helical nature of the fringes 1114 of the volume grating makes the PVH grating 1100 preferably responsive to light of polarization having one particular handedness, e.g. left- or right-circular polarization, while being substantially non-responsive to light of the opposite handedness of polarization. Thus, the helical fringes 1114 make the PVH grating 1100 polarization-selective, causing the PVH grating 1100 to diffract light of only one handedness of circular polarization. This is illustrated in FIG. 11B, which shows a light beam 1120 impinging onto the PVH grating 1100. The light beam 1120 includes a left circular polarized (LCP) beam component 1121 and a right circular polarized (RCP) beam component 1122. The LCP beam component 1121 propagates through the PVH grating 1100 substantially without diffraction. Herein, the term "substantially without diffraction" means that, even though an insignificant portion of the beam (the LCP beam component 1121 in this case) might diffract, the portion of the diffracted light energy is so small that it does not impact the intended performance of the PVH grating 1100. The RCP beam component 1122 of the light beam 1120 undergoes diffraction, producing a diffracted beam 1122'. The polarization selectivity of the PVH grating 1100 results from the effective refractive index of the grating being dependent on the relationship between the handedness, or chirality, of the impinging light beam and the handedness, or chirality, of the grating fringes 1114.

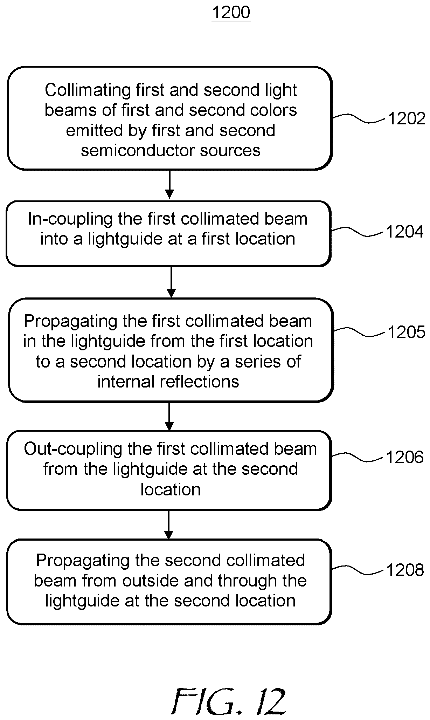

Referring to FIG. 12 with further reference to FIG. 10, a method 1200 (FIG. 12) for providing a multi-color light beam, e.g. for use in a scanning image projector, includes collimating (1202) first and second light beams of first and second colors respectively, emitted by first and second semiconductor sources respectively, to obtain first and second collimated beams respectively. For example, the first 1031 and second 1032 light beams (FIG. 10) emitted by the first 1001 and second 1002 semiconductor sources, such as laser diodes, may be collimated by the first 1011 and second 1012 collimators respectively. The first collimated beam is in-coupled (FIG. 12; 1204) into a lightguide at a first location, and propagated (1205) in the lightguide in a first direction by a series of internal reflections from opposed surfaces of the lightguide to a second, laterally offset location. For example, the first collimated beam 1021 may be in-coupled into the lightguide 1018 at the first location 1051 and propagated to the second location 1052. The first collimated beam is then out-coupled from the slab (FIG. 12; 1206) at the second location 1052. The second collimated beam is propagated (1208) from outside and through the lightguide at the second location, thereby combining the first and second collimated beams into the multi-color light beam. The first and second collimated beams may be combined into the multi-color light beam by wavelength, e.g. by using VBG(s) in the grating structure 1019, and/or by polarization, e.g. by using PVH(s) , e.g. the one illustrated in FIGs. 11A and 11B, in the grating structure 1019 of FIG. 10.

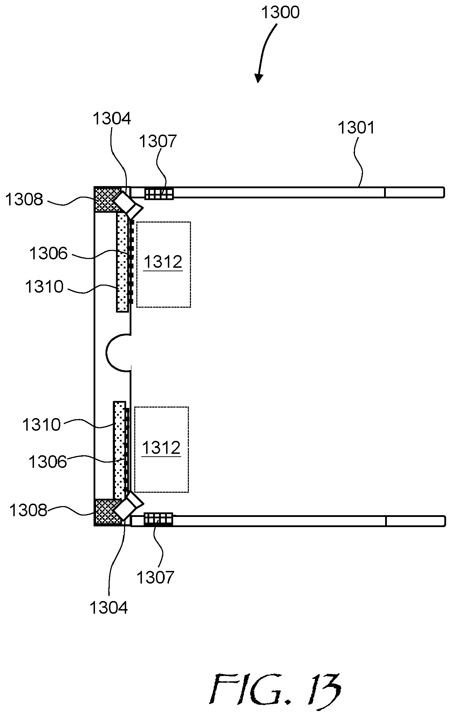

Turning to FIG. 13, an augmented reality (AR) near-eye display 1300 includes a frame 1301 having a form factor of a pair of eyeglasses. The frame 1301 supports, for each eye: a projector 1308 including any of the multi-color light sources described herein, a pupil-replicating waveguide 1310 optically coupled to the projector 1308, an eye-tracking camera 1304, a plurality of illuminators 1306, and an eye-tracking camera controller 1307. The illuminators 1306 may be supported by the pupil-replicating waveguide 1310 for illuminating an eyebox 1312. The projector 1308 provides a fan of light beams carrying an image in angular domain to be projected into a user's eye. The projector 1308 can be either on the world side or eye side of the waveguide 1310. The pupil-replicating waveguide 1310 receives the fan of light beams and provides multiple laterally offset parallel copies of each beam of the fan of light beams, thereby extending the projected image over the eyebox 1312. The coherence length of the laser sight source of the projector 1308 may be less than a difference between optical path lengths of multiple light paths inside the pupil-replicating waveguide 1310. This enables one to lessen or reduce optical interference at the eyebox 1312 between portions of the image light propagated via different light paths.

Multi-emitter laser sources may be used in the multi-color light source of the projector 1308. Each emitter of the multi-emitter laser chip may be configured to emit image light at an emission wavelength of a same color channel. The emission wavelengths of different emitters of the same multi-emitter laser chip may differ from emitter to emitter. In some examples, the projector 1308 may include two or more multi-emitter laser chips emitting light at wavelengths of a same color channel or different color channels of visible light, and/or at an infrared wavelength or wavelengths. For AR applications, the pupil-replicating waveguide 1310 can be transparent or translucent to enable the user to view the outside world together with the images projected into each eye and superimposed with the outside world view. The images projected into each eye may include objects disposed with a simulated parallax, so as to appear immersed into the real world view.

The purpose of the eye-tracking cameras 1304 is to determine position and/or orientation of both eyes of the user. Once the position and orientation of the user's eyes are known, a gaze convergence distance and direction may be determined. The imagery displayed by the projectors 1308 may be adjusted dynamically to account for the user's gaze, for a better fidelity of immersion of the user into the displayed augmented reality scenery, and/or to provide specific functions of interaction with the augmented reality. In operation, the illuminators 1306 illuminate the eyes at the corresponding eyeboxes 1312, to enable the eye-tracking cameras to obtain the images of the eyes, as well as to provide reference reflections i.e. glints. The glints may function as reference points in the captured eye image, facilitating the eye gazing direction determination by determining position of the eye pupil images relative to the glints images. To avoid distracting the user with illuminating light, the latter may be made invisible to the user. For example, infrared light may be used to illuminate the eyeboxes 1312.

The function of the eye-tracking camera controllers 1307 is to process images obtained by the eye-tracking cameras 1304 to determine, in real time, the eye gazing directions of both eyes of the user. In some examples, the image processing and eye position/orientation determination functions may be performed by a central controller, not shown, of the AR near-eye display 1300. The central controller may also provide control signals to the projectors 1308 to generate the images to be displayed to the user, depending on the determined eye positions, eye orientations, gaze directions, eyes vergence, etc.

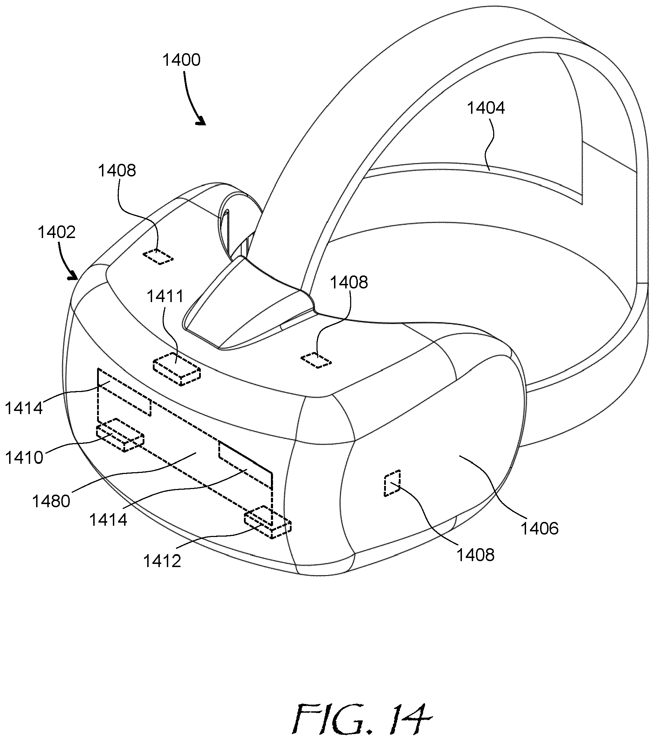

Referring now to FIG. 14, an HMD 1400 is an example of an AR/VR wearable display system which encloses the user's face, for a greater degree of immersion into the AR/VR environment. The HMD 1400 may generate the entirely virtual 3D imagery. The HMD 1400 may include a front body 1402 and a band 1404 that can be secured around the user's head. The front body 1402 is configured for placement in front of eyes of a user in a reliable and comfortable manner. A display system 1480 may be disposed in the front body 1402 for presenting AR/VR imagery to the user. The display system 1480 may include any of the multicolor light sources disclosed herein e.g. in combination with scanning projectors to raster or scan the image being displayed. Sides 1406 of the front body 1402 may be opaque or transparent.

In some examples, the front body 1402 includes locators 1408 and an inertial measurement unit (IMU) 1410 for tracking acceleration of the HMD 1400, and position sensors 1412 for tracking position of the HMD 1400. The IMU 1410 is an electronic device that generates data indicating a position of the HMD 1400 based on measurement signals received from one or more of position sensors 1412, which generate one or more measurement signals in response to motion of the HMD 1400. Examples of position sensors 1412 include: one or more accelerometers, one or more gyroscopes, one or more magnetometers, another suitable type of sensor that detects motion, a type of sensor used for error correction of the IMU 1410, or some combination thereof. The position sensors 1412 may be located external to the IMU 1410, internal to the IMU 1410, or some combination thereof.

The locators 1408 are traced by an external imaging device of a virtual reality system, such that the virtual reality system can track the location and orientation of the entire HMD 1400. Information generated by the IMU 1410 and the position sensors 1412 may be compared with the position and orientation obtained by tracking the locators 1408, for improved tracking accuracy of position and orientation of the HMD 1400. Accurate position and orientation is important for presenting appropriate virtual scenery to the user as the latter moves and turns in 3D space.

The HMD 1400 may further include a depth camera assembly (DCA) 1411, which captures data describing depth information of a local area surrounding some or all of the HMD 1400. The depth information may be compared with the information from the IMU 1410, for better accuracy of determination of position and orientation of the HMD 1400 in 3D space.

The HMD 1400 may further include an eye tracking system 1414 for determining orientation and position of user's eyes in real time. The obtained position and orientation of the eyes also allows the HMD 1400 to determine the gaze direction of the user and to adjust the image generated by the display system 1480 accordingly. The determined gaze direction and vergence angle may be used to adjust the display system 1480 to reduce the vergence-accommodation conflict. The direction and vergence may also be used for displays' exit pupil steering as disclosed herein. Furthermore, the determined vergence and gaze angles may be used for interaction with the user, highlighting objects, bringing objects to the foreground, creating additional objects or pointers, etc. An audio system may also be provided including e.g. a set of small speakers built into the front body 1402.

Embodiments of the present disclosure may include, or be implemented in conjunction with, an artificial reality system. An artificial reality system adjusts sensory information about outside world obtained through the senses such as visual information, audio, touch (somatosensation) information, acceleration, balance, etc., in some manner before presentation to a user. By way of non-limiting examples, artificial reality may include virtual reality (VR), augmented reality (AR), mixed reality (MR), hybrid reality, or some combination and/or derivatives thereof. Artificial reality content may include entirely generated content or generated content combined with captured (e.g., real-world) content. The artificial reality content may include video, audio, somatic or haptic feedback, or some combination thereof. Any of this content may be presented in a single channel or in multiple channels, such as in a stereo video that produces a three-dimensional effect to the viewer. Furthermore, in some examples, artificial reality may also be associated with applications, products, accessories, services, or some combination thereof, that are used to, for example, create content in artificial reality and/or are otherwise used in (e.g., perform activities in) artificial reality. The artificial reality system that provides the artificial reality content may be implemented on various platforms, including a wearable display such as an HMD connected to a host computer system, a standalone HMD, a near-eye display having a form factor of eyeglasses, a mobile device or computing system, or any other hardware platform capable of providing artificial reality content to one or more viewers.

The present disclosure is not to be limited in scope by the specific examples described herein. Indeed, other various examples and modifications, in addition to those described herein, will be apparent to those of ordinary skill in the art from the foregoing description and accompanying drawings. Thus, such other examples and modifications are intended to fall within the scope of the present disclosure. Further, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein.

## Claims

1. A multi-color light source comprising:
first to third semiconductor sources for emitting first to third light beams of first to third colors respectively, wherein in operation, the first and second light beams co-propagate with one another;
a first collimator coupled to the first and second semiconductor sources for at least partially co-collimating the first and second co-propagating light beams, respectively, to obtain a first collimated beam, and a second collimator coupled to the third semiconductor source for at least partially collimating the third light beam to obtain a second collimated beam; and
a combiner for combining the first and second collimated beams into an output beam of the multi-color light source.

2. The multi-color light source of claim 1, wherein the combiner comprises a lightguide comprising:
a slab of transparent material; and
a grating structure supported by the slab and comprising an in-coupling region at a first location for in-coupling one of the first or second collimated beams for propagating in the slab in a first direction by internal reflections from opposed surfaces of the slab to a second location offset from the first location along the slab; and an out-coupling region at the second location for out-coupling the one of the first or second collimated beams from the slab at the second location;
wherein the other one of the first or second collimated beams is configured to propagate through the slab at the second location to form the output beam;
preferably wherein the grating structure comprises at least one of: a volume Bragg grating (VBG); a polarization volume hologram (PVH); or a Pancharatnam-Berry phase (PBP) grating.

3. The multi-color light source of claim 1 or 2, wherein:
the first to third semiconductor sources comprise first to third side-emitting semiconductor chips, respectively, the first to third light beams each having a fast-axis divergence in a fast-axis plane and a slow-axis divergence in a slow-axis plane perpendicular to the fast-axis plane and less than the fast-axis divergence;
the first and second side-emitting semiconductor chips are disposed proximate to one another in a first plane; and
the third side-emitting semiconductor chip is disposed in a second plane.

4. The multi-color light source of claim 3, wherein the second plane is above or below the first plane.

5. The multi-color light source of claim 3 or 4, wherein:
the first collimator comprises a first fast-axis collimator for co-collimating the first and second light beams in the corresponding fast-axis planes; and
the second collimator comprises a second fast-axis collimator for collimating the third light beam in the corresponding fast-axis plane.

6. The multi-color light source of claim 5, wherein:
the first collimator further comprises a first slow-axis collimator upstream of the combiner for co-collimating the first and second light beams in the corresponding slow-axis plane; and
the second collimator further comprises a second slow-axis collimator upstream of the combiner for co-collimating the third light beam in the corresponding slow-axis plane.

7. The multi-color light source of claim 5 or 6, further comprising a slow-axis collimator downstream of the combiner for collimating the output beam in the corresponding slow-axis plane.

8. The multi-color light source of any of claims 5 to 7, wherein the first and second fast-axis collimators each have a negative optical power in the slow-axis plane and positive optical power in the fast-axis plane.

9. The multi-color light source of any of claims 3 to 8, wherein:
the first collimator comprises a first slow-axis de-collimator for de-collimating the first and second light beams in the corresponding slow-axis planes; and
the second collimator comprises a second slow-axis de-collimator for de-collimating the third light beam in the corresponding slow-axis plane;
preferably wherein:
the first slow-axis de-collimator is configured to equate a divergence of the first light beam in fast- and slow-axis planes, and to equate a divergence of the second light beam in fast- and slow-axis planes; and
the second slow-axis de-collimator is configured to equate a divergence of the second light beam in fast- and slow-axis planes;
each one of the first and second collimators further comprising a rotationally-symmetric collimating element downstream of the respective slow-axis de-collimator, for collimating the first and second light beams respectively.

10. The multi-color light source of any preceding claim, further comprising a fourth semiconductor source for emitting a fourth light beam co-propagating with the third light beam, the first to fourth semiconductor sources comprising first to fourth side-emitting semiconductor chips, respectively;
wherein the second collimator is configured for co-collimating the co-propagating third and fourth light beams to form the second collimated beam;
preferably wherein the first and second side-emitting semiconductor chips are disposed side-by-side in a common first plane, and the third and fourth side-emitting semiconductor chips are disposed side-by-side in a common second plane.

11. The multi-color light source of any preceding claim, wherein the third color corresponds to a red color of visible light;
preferably wherein the first and second collimators each comprise at least one of a refractive lens, a diffractive lens, a Pancharatnam-Berry phase (PBP) lens, or a reflector.

12. A multi-color light source comprising:
first and second semiconductor sources for emitting first and second light beams at first and second wavelengths respectively;
first and second collimators for collimating the first and second light beams respectively to obtain first and second collimated beams respectively; and
a lightguide comprising:
a slab of transparent material; and
a grating structure supported by the slab and comprising an in-coupling region at a first location for in-coupling the first collimated beam for propagating in the slab in a first direction by internal reflections from opposed surfaces of the slab to a second location offset from the first location along the slab; and an out-coupling region at the second location for out-coupling the first collimated beam from the slab;
wherein in operation, the second collimated beam propagates through the slab at the second location to combine with the first collimated beam.

13. The multi-color light source of claim 12, wherein the grating structure comprises at least one of: a volume Bragg grating (VBG); a polarization volume hologram (PVH); or a Pancharatnam-Berry phase (PBP) grating.

14. A method for providing a multi-color light beam, the method comprising:
collimating first and second light beams of first and second colors respectively, emitted by first and second semiconductor sources respectively, to obtain first and second collimated beams respectively;
in-coupling the first collimated beam into a lightguide at a first location for propagating in the lightguide in a first direction by internal reflections from opposed surfaces of the lightguide to a second location;
out-coupling the first collimated beam from the lightguide at the second location; and
propagating the second collimated beam from outside and through the lightguide at the second location, thereby combining the first and second collimated beams into the multi-color light beam.

15. The method of claim 14, wherein the first and second collimated beams are combined into the multi-color light beam by wavelength or polarization.
